# EUROPÄISCHE PATENTSCHRIFT

(11) **EP 3 807 072 B1**
(45) Veröffentlichungstag und Bekanntmachung des Hinweises auf die Patenterteilung: **06.11.2024**
(21) Anmeldenummer: 19730308.4
(22) Anmeldetag: 10.06.2019
(51) Int. Cl.: B29C 48/00

(54) **VORRICHTUNG UND VERFAHREN ZUM ABLÄNGEN EINES EXTRUDIERTEN ROHRES**
DEVICE FOR CUTTING EXTRUDED PLASTIC PROFILES TO LENGTH
DISPOSITIF DE COUPE À LONGUEUR DE PROFILÉS EN MATIÈRE PLASTIQUE EXTRUDÉS

(30) Priorität: 15.06.2018 DE 102018114472; 15.06.2018 DE 102018114473; 15.06.2018 DE 102018114474
(43) Veröffentlichungstag der Anmeldung: 21.04.2021
(73) Patentinhaber: battenfeld-cincinnati Germany GmbH, 32547 Bad Oeynhausen (DE)
(72) Erfinder: DOHMANN, Heinrich, 37671 Höxter (DE); BECKER, Klaus, 32584 Löhne (DE); DRÖGE, Jörg, 47647 Kerken (DE)
(86) Internationale Anmeldenummer: PCT/EP2019/065077
(87) Internationale Veröffentlichungsnummer: WO 2019/238608

(56) Entgegenhaltungen:
- WO-A1-2014/153925
- DE-A1- 102010 040 967

## Beschreibung

Die Erfindung betrifft ein Verfahren zum Ablängen eines extrudierten Kunststoffrohres mittels einer Trennvorrichtung und um die Extrusionsachse des extrudierten Rohres rotierenden Trenneinheit, wobei die Trenneinheit drehbar gelagert ist und das Trennen mit an der Trenneinheit angeordneten Schneidwerkzeugen erfolgt, wobei zum Bewegen der Schneidwerkzeuge Energie übertragen wird, sowie eine entsprechende Vorrichtung dafür.

Verfahren und Vorrichtungen zum Ablängen von extrudierten Kunststoffrohren sind aus dem Stand der Technik bekannt. So beschreibt zum Beispiel die DE 102010040967 A1 ein Verfahren zum Ablängen eines extrudierten Kunststoffrohres mittels einer Trennvorrichtung die mindestens einen um die Extrusionsachse des extrudierten Rohres rotierenden Korb mit Schwinge und Halter für ein Schneidwerkzeug, sowie einem daran angeordneten Schneidmesser umfasst, wobei sich der rotierende Korb in Ruhestellung in einer definierten Ausgangsposition befindet und ein Akku an einer Ladestation angedockt ist, wobei ein Schneidimpuls folgende Schritte in der angegebenen Reihenfolge auslöst: Entkoppeln des Akkus von der Ladestation, Rotieren des Korbs um die Extrusionsachse, Einschwenken der Schwinge in Richtung der Mittelachse des Rohres über einen Servoantrieb bis die eingestellte Eintauchtiefe erreicht ist, Zurückführen der Schwinge in die Ausgangsposition, stoppen der Rotation des Korbes, Rückführung des Korbes in die definierte Ausgangsposition, Ankoppeln des Akkus an die Ladestation.

Nachteil dieses Verfahrens ist es jedoch, dass der Akku immer wieder in die Ausgangsposition zum Aufladen zurückgebracht werden muss, eine relativ lange Zeit benötigen, bis sie wieder aufgeladen sind und hier nur eine sehr geringe Zeit verbleibt den Ladevorgang durchzuführen.

**Aufgabe** der Erfindung ist es daher ein Verfahren anzubieten bei dem diese Nachteile nicht vorliegen und trotzdem eine effiziente Energieübertragung möglich ist. Hierbei soll vor allem erreicht werden, dass der diskontinuierliche Energiebedarf der Trennvorrichtung und damit die benötigten Energiespitzen aufgefangen werden.

Die **Lösung** der Aufgabe bezüglich des Verfahrens ist in Verbindung mit dem Oberbegriff des Anspruches 1 dadurch gekennzeichnet, dass die Energie von einem feststehenden Außenbereich zu einem beweglichen Innenbereich übertragen wird, wobei die Übertragung der Energie permanent oder zyklisch erfolgt und die übertragene Energie in einem Energiespeicher gepuffert wird, wobei die Energie induktiv oder kapazitiv übertragen wird, wobei die Entladezeit des Energiespeichers zwischen 2% und 25% des gesamten Trennzyklus liegt.

Beim Trennen von Rohren wird in der Regel die Trennvorrichtung beim Extrusionsprozess über die axiale Bewegung des Rohres automatisch mitgenommen, ein Energiebedarf ist erst beim eigentlichen Abtrennvorgang von Nöten. Dieser Energiebedarf ist je nach eingesetzter Trennvorrichtung und der Rohrdimension unterschiedlich hoch. Dieser Energiebedarf kann nur mittels relativ großen elektrischen Kontakten übertragen werden.

Die vorgeschlagene Lösung bietet nun die Möglichkeit über kleine Ströme, z.B. im 24V Bereich, kontinuierlich Energie an den Innenbereich zu übertragen und die Energie in einem Energiespeicher zwischen zu speichern. Beim eigentlichen Trennvorgang kann die zusätzliche Energie aus dem Energiespeicher bereitgestellt werden, um den Trennvorgang durchzuführen. Weiterhin ist es beim Einsatz von 24V nicht erforderlich zusätzliche Sicherheitsmaßnahmen wie, Absicherung gegen einen elektrischen Schlag, vorzuhalten.

Besonders vorteilhaft ist es wenn als Energiespeicher ein Kondensator eingesetzt wird. Insbesondere spezielle Kondensatoren, wie Goldcaps, auch als Superkondensatoren bezeichnet, eignen sich hier zum Einsatz. Goldcaps sind Kondensatoren die schnell Energie aufnehmen aber auch schnell Energie abgeben können, was für den diskontinuierlichen Energiebedarf beim Schneidvorgang von großem Vorteil ist. Weiterhin sind sie besser als Akkus dazu geeignet viele Lade- und Entladezyklen schadlos zu überstehen.

Zur Energieübertragung werden verschiedene Möglichkeiten bereitgestellt. Die Energie kann berührungslos per Induktion oder auch kapazitiv übertragen werden.

Die Energie kann somit nach den Verfahren der Nahfeldkommunikation übertragen werden. Hierbei handelt es sich um die Kopplung mittels kapazitiver Felder, magnetischer Induktion (MI), und der magnetischen Resonanz (MR). Die Energie wird also über wenige Zentimeter Abstand übertragen. Es können hier einige Watt bis zu mehreren Kilowatt an Leistung übertragen werden.

Diese berührungslose Energieübertragung hat gegenüber herkömmlichen Schleifleitungen die Vorteile, dass sie absolut wartungsfrei sind, keinen Abrieb haben, keinem Verschleiß ausgesetzt sind und auch noch berührungssicher (keine spannungsführenden Teile) sind. Verschmutzung, Feuchte oder Temperatureinflüsse haben keine Beeinträchtigung.

Es gibt aber auch Riemen die mit einem Metallkern ausgestattet sind die zur Energieübertragung geeignet sind. Die Energie kann mit Hilfe einer Antriebskette oder einer Zahnradverbindung übertragen werden.

Auch spezielle Lager werden mit einem Stator im Außenteil und einem Rotor im Innenteil angeboten die zur kontinuierlichen Übertragung der Energie eingesetzt werden können.

Die **Lösung** der Aufgabe bezüglich der Vorrichtung ist in Verbindung mit dem Oberbegriff des Anspruches 6 dadurch gekennzeichnet, dass die Lager der Trenneinheit derart ausgeführt sind, dass Energie von einem feststehenden Außenbereich zu einem beweglichen Innenbereich übertragbar ist, wobei die Übertragung von einem Stator auf einen Rotor durch Berührung der Wälzkörper erfolgt, wobei das Lager mit einem leitfähigem Fluid gefüllt ist, wodurch eine permanente Übertragung von Energie ermöglicht wird.

Der Wälzkörper hat eine Linien- und keine Punktberührung, wodurch eine Energieübertragung verbessert wird.

Weiterbildungsgemäß ist vorgesehen, dass der Wälzkörper zusätzlich noch mit einer elastischen elektrisch leitenden Oberfläche ausgestattet ist, wodurch zusätzlich eine gute Berührung der beiden Linien sichergestellt wird.

Der mit diesem Verfahren, eventuell unterstützt mit der erfindungsgemäßen Vorrichtung, durchführbare Trennzyklus wird wie folgt beschrieben:
Der Trennwagen positioniert sich im Einlaufbereich der Trennvorrichtung und synchronisiert sich mit der aktuellen Produktionslinie (Anpassung der Geschwindigkeit etc.), die Klemmeinrichtung klemmt sich an das Rohr, damit die Trennvorrichtung sozusagen mitfahren kann.

Die Trennwerkzeuge (Trennstahl, Schneidmesser oder Sägeblätter), es können auch Vorrichtungen zum Fasen des Rohres sein, bewegen sich auf die Mittelachse des Rohres zu, um es dann entsprechend der Vorgaben, z.B. aus der Maschinensteuerung, zu durchtrennen. In diesem Abschnitt des Trennens wird die meiste Energie benötigt die aus dem Energiespeicher abgerufen wird.

Nach dem Trennvorgang löst die Klemmeinrichtung wieder die Verbindung zum Rohr, die Trennvorrichtung verfährt wieder in die Ausgangsposition und lädt den Energiespeicher dabei wieder auf. Je nach Extrusionsgeschwindigkeit und der erforderlichen Rohrlänge kann sich eine entsprechend Wartezeit ergeben. Durch die unterschiedlichen Gegebenheiten zu Verweilzeit, Trenngeschwindigkeit, Rohrdurchmesser etc., kann die Entladezeit des Energiespeichers auch unter 25% des Trennzyklus, z.B. bei nur bis zu 10% oder noch geringer bei 2% von diesem liegen.

Ein Messrad steuert hierbei den gesamten Zyklus und überwacht die laufenden Meter des produzierten Rohres.

Es ist weiterhin möglich, das Laden des Energiespeichers an einer Stelle durchzuführen, bis so viel Energie geladen ist, dass der oben beschriebene Trennzyklus komplett mittels der Energieversorgung aus dem Energiespeicher möglich ist.

In den Zeichnungen wird schematisch eine erfindungsgemäße Vorrichtung gezeigt:
- Fig. 1: zeigt eine typische Extrusionslinie
- Fig. 2: eine perspektivische Ansicht eines Teils der Trennvorrichtung
- Fig. 3: eine Prinzipskizze
- Fig. 4: ein Lager über das Energie übertragbar ist
- Fig. 5: zeigt eine diskontinuierliche Stromabnahme
- Fig. 6: zeigt eine kontinuierliche Stromabnahme

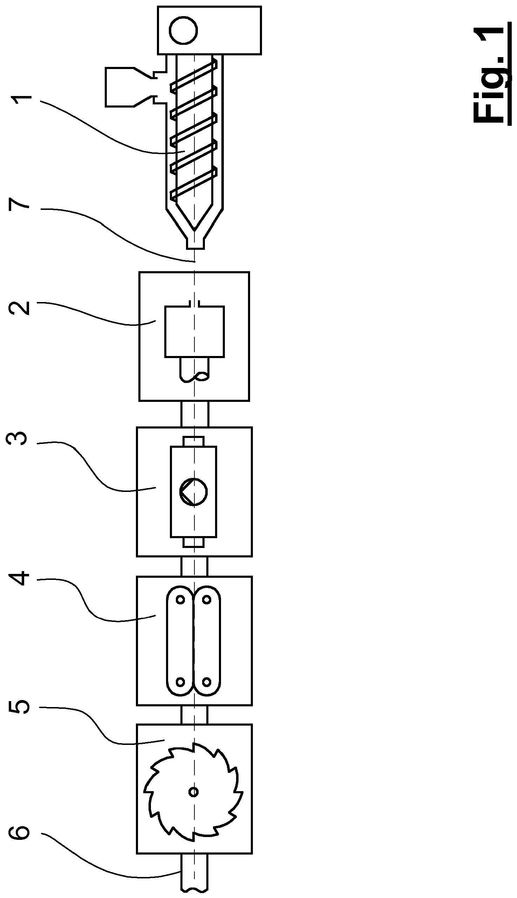

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet. Die Extrusionsachse ist mit Positionsziffer 7 unter Bezug genommen.

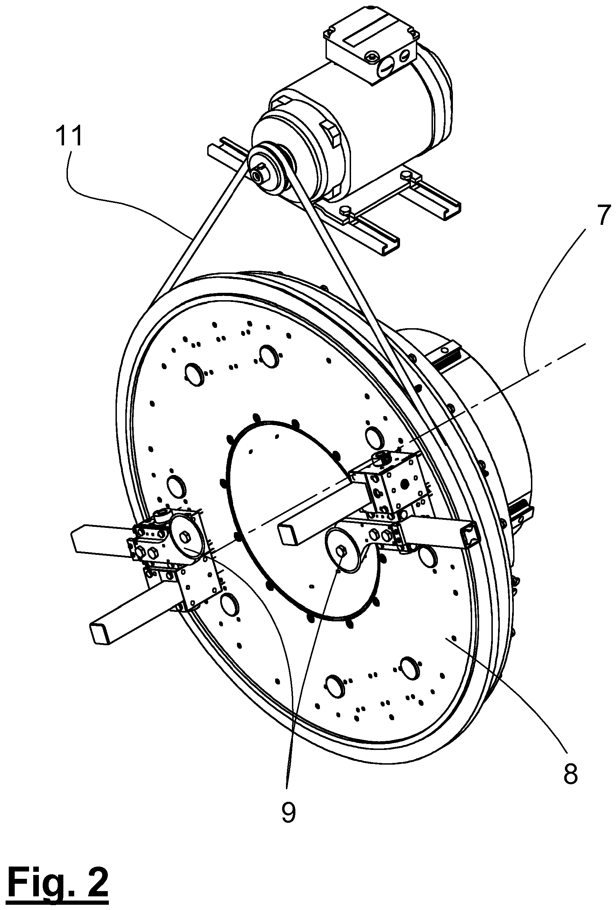

Figur 2 zeigt eine perspektivische Darstellung der erfindungsgemäßen Vorrichtung mit der rotierenden Trenneinheit 8 und den daran angeordneten Schneidwerkzeugen 9. Die Trenneinheit 8 ist um die Extrusionsachse 7 rotierbar.

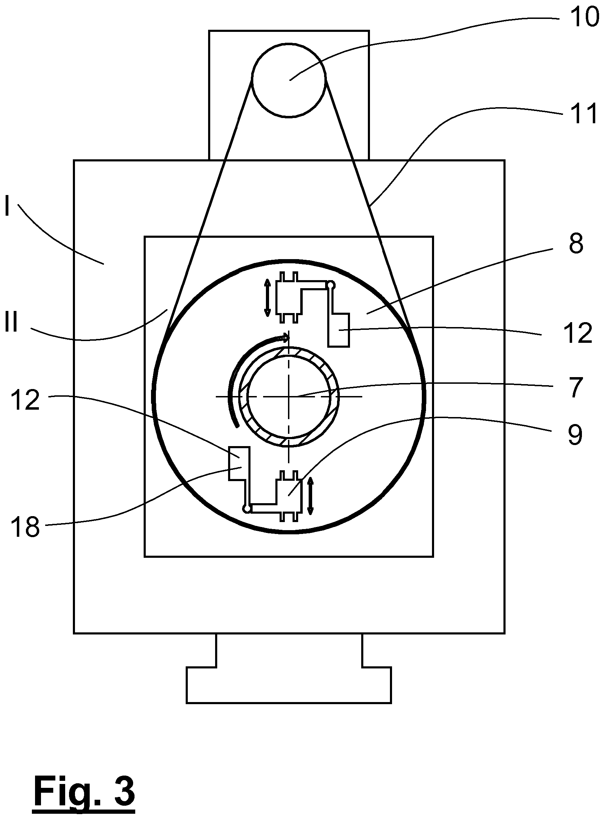

Figur 3 zeigt schematisch den feststehenden Außenbereich I und den Innenbereich II in dem bewegliche Teile angeordnet sind. Im Innenbereich II ist die rotierbare Trenneinheit 8 mit der Schneidvorrichtung 7 angeordnet. Die Aufnahmescheibe ist über einen Antrieb 10 mittels eines Riemens 11 um die Extrusionsachse 7 rotierbar. Vom feststehenden Außenbereich I muss nun Energie in den Innenbereich II übertragen werden, damit ein Trennvorgang mittels der Schneidwerkzeuge 9 ermöglicht wird. Da für den Schneidvorgang eine höhere Energie benötigt wird, kann diese über den im Innenbereich II angeordneten Energiespeicher 12 und dem elektromechanischen Antrieb 18 bereitgestellt werden.

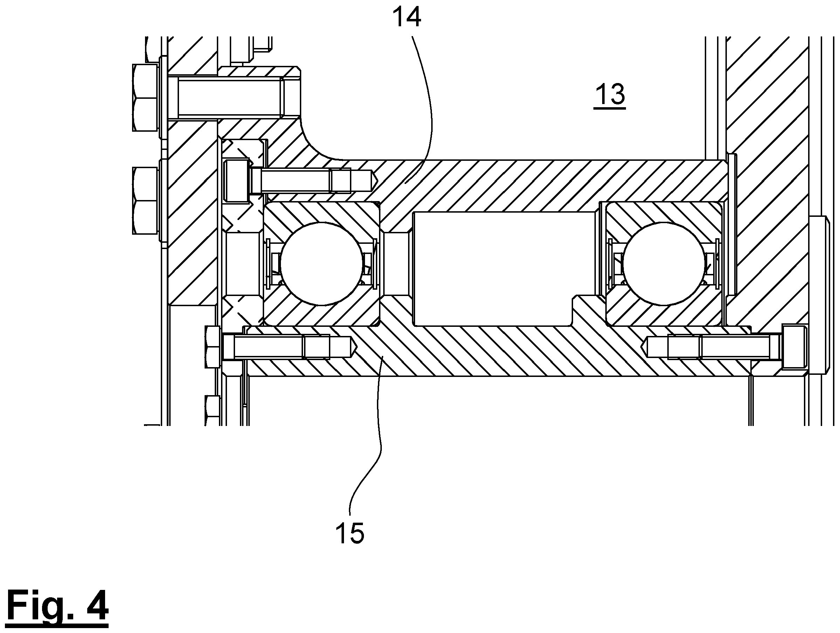

Figur 4 zeigt eine weitere Energieübertragungsmöglichkeit. Hier kann über das Lager 13 die Energie mittels der Wälzkörper vom feststehenden Teil - dem Stator 14 - auf den beweglichen Teil - dem Rotor 15 - übertragen werden. Der Wälzkörper hat eine Linien- und keine Punktberührung, wodurch eine große Energieübertragung ermöglicht wird. Wenn der Wälzkörper zusätzlich noch mit einer elastischen Oberfläche ausgestattet ist, wird zusätzlich noch eine gute Berührung der beiden Linien sichergestellt.

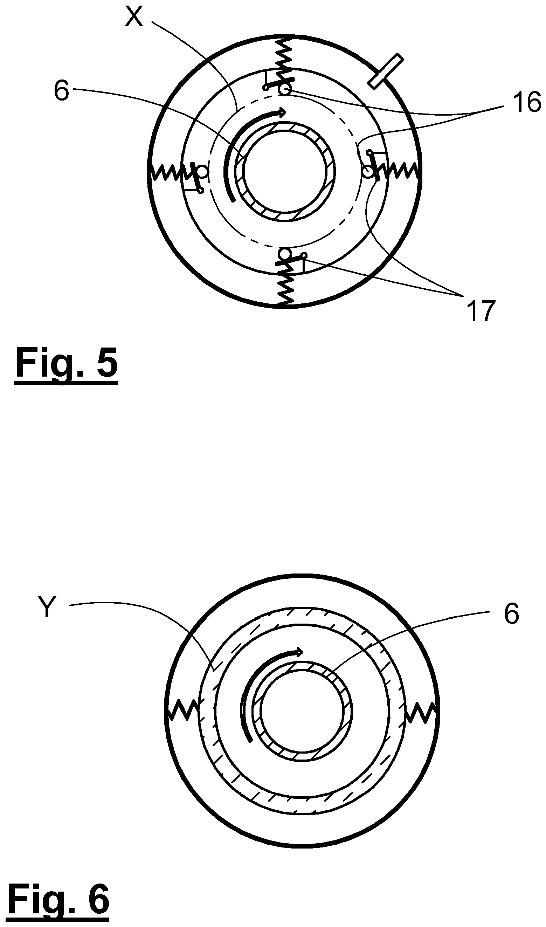

Figur 5 zeigt eine nicht unter den Schutzumfang der Ansprüche fallende Z Energieübertragung bei stehendem Rohr 6. Über die Ladepunkte 16 und die Schleifringe 17 wird bei jedem Kontakt die Energie übertragen und der Energiespeicher geladen. Symbolisch wird das Rotieren mit dem Pfeil und der Linie X dargestellt.

Figur 6 zeigt eine nicht unter den Schutzumfang der Ansprüche fallende Variante bei der die Energie direkt mittels Schleifringen übertragen wird. Auch hier steht das Rohr 6 und der rotierende Bereich wird mit Y gekennzeichnet. Das Rotieren wird wiederum mittels des Pfeils symbolisiert.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: Extrusionsachse
- 8: rotierende Trenneinheit
- 9: Schneidwerkzeug
- 10: Antrieb für 8
- 11: Antriebsriemen für 8
- 12: Energiespeicher
- 13: Lager für 8
- 14: Stator in 13
- 15: Rotor in 13
- 16: Ladepunkt
- 17: Schleifring
- 18: elektrisch mechanischer Antrieb

- I: Außenbereich
- II: Innenbereich
- X: rotierender Bereich I
- Y: rotierender Bereich II

## Patentansprüche

1. Verfahren zum Ablängen eines extrudierten Kunststoffrohres (6) mittels einer Trennvorrichtung (5) und um die Extrusionsachse (7) des extrudierten Rohres (6) rotierenden Trenneinheit (8),
wobei die Trenneinheit (8) drehbar gelagert ist und
das Trennen mit an der Trenneinheit (8) angeordneten Schneidwerkzeugen (9) erfolgt,
wobei zum Bewegen der Schneidwerkzeuge (9) Energie übertragen wird,
**dadurch gekennzeichnet, dass**
die Energie von einem feststehenden Außenbereich (I) zu einem beweglichen Innenbereich (II) übertragen wird,
wobei die Übertragung der Energie permanent oder zyklisch erfolgt und die übertragene Energie in einem Energiespeicher (12) gepuffert wird,
wobei die Energie induktiv oder kapazitiv übertragen wird, wobei die Entladezeit des Energiespeichers (12) zwischen 2% und 25% des gesamten Trennzyklus liegt.

2. Verfahren nach Anspruch 1, **dadurch gekennzeichnet, dass** die Übertragung der Energie an einen Kondensator als Energiespeicher erfolgt.

3. Verfahren nach Anspruch 1 oder 2, **dadurch gekennzeichnet, dass** die Übertragung der Energie über ein Lager (13) erfolgt in dem ein Stator (10) und ein Rotor (11) zur Energieübertragung angeordnet sind.

4. Verfahren nach Anspruch 1 oder 2, **dadurch gekennzeichnet, dass** die Energieübertragung gekoppelt mit der Kraftübertragung erfolgt.

5. Verfahren nach Anspruch 1 oder 2, **dadurch gekennzeichnet, dass** die Energieübertragung über in einem Riemen eingebundene Metallteile erfolgt.

6. Vorrichtung zum Ablängen eines extrudierten Kunststoffrohres (6) umfassend
eine Trennvorrichtung (5) und
eine um die Extrusionsachse (7) des extrudierten Rohres (6) rotierenden Trenneinheit (8),
wobei die Trenneinheit (8) drehbar gelagert ist und
an der Trenneinheit (8) Schneidwerkzeuge (9) angeordneten sind,
wobei zum Bewegen der Schneidwerkzeuge (9) Energie übertragen wird und die übertragene Energie in einem Energiespeicher (12) gepuffert wird,
**dadurch gekennzeichnet, dass**
Lager der Trenneinheit (8) derart ausgeführt sind, dass Energie von einem feststehenden Außenbereich (I) zu einem beweglichen Innenbereich (II) übertragbar ist,
wobei die Übertragung von einem Stator (14) auf einen Rotor (15) durch Berührung der Wälzkörper erfolgt und
wobei das Lager mit einem leitfähigem Fluid gefüllt ist, wodurch eine permanente Übertragung von Energie ermöglicht wird.

7. Vorrichtung nach Anspruch 6, **dadurch gekennzeichnet, dass** die Wälzkörper mit einer elastischen elektrisch leitenden Oberfläche ausgestattet sind.

8. Vorrichtung nach Anspruch 6 oder 7, **dadurch gekennzeichnet, dass** Antriebsketten oder verspannte Zahnräder eingesetzt werden.

## Claims

1. Process for cutting an extruded plastic pipe (6) to length using a separator (5) and a cutting unit (8) rotating around the extrusion axis (7) of the extruded pipe (8),
wherein the cutting unit (8) is mounted so that it can rotate and separation is executed with cutting tools (9) arranged on the cutting unit (8),
wherein energy is transmitted to move the cutting tools (9),
**characterised by**
the energy being transmitted from a fixed outer area (I) to a moving inner area (II),
wherein transmission of the energy is permanent or cyclical and the transmitted energy is buffered in an energy store (12),
wherein the energy is transmitted inductively or capacitively,
wherein the discharge time of the energy store (12) is between 2% and 25% of the entire cutting cycle.

2. Process according to claim 1 **characterised by** the transmission of energy to a capacitor being executed as energy storage.

3. Process according to claim 1 or 2 **characterised by** the transmission of energy being executed via a bearing (13), in which a stator (10) and a rotor (11) are arranged for energy transmission.

4. Process according to claim 1 or 2 **characterised by** the energy transmission being coupled to the transmission of power.

5. Process according to claim 1 or 2 **characterised by** the energy transmission being executed using metal parts integrated in a belt.

6. Device for cutting an extruded plastic pipe (6) to size, comprising a separator (5) and
a cutting unit (8) rotating around the extrusion axis (7) of the extruded pipe (6),
wherein the cutting unit (8) is mounted so that it can rotate and cutting tools (9) are arranged on the cutting unit (8),
wherein movement of the cutting tools (9) involves the transmission of energy and the transmitted energy is buffered in an energy store (12),
**characterised by**
the bearing of the cutting unit (8) being designed so that energy can be transmitted from a fixed outer area (I) to a moving inner area (II),
wherein the transmission is executed from a stator (14) to a rotor (15) through contact of the rolling elements and
wherein the bearing is filled with a conductive fluid to permit permanent transmission of energy.

7. Device according to claim 6 **characterised by** the rolling elements being equipped with an elastic electrically conductive surface.

8. Device according to claim 6 or 7 **characterised by** drive chains or braced gear wheels being used.

## Revendications

1. Procédé pour couper à longueur un tube en plastique extrudé (6) au moyen d'un dispositif de coupe (5) et d'une unité de séparation (8) tournant autour de l'axe d'extrusion (7) du tube extrudé (6),
l'unité de séparation (8) étant montée de manière rotative et
la séparation s'effectue avec des outils de coupe (9) disposés sur l'unité de séparation (8),
de l'énergie étant transmise pour déplacer les outils de coupe (9),
**caractérisé en ce que**
l'énergie est transmise d'une zone extérieure fixe (I) à une zone intérieure mobile (II),
la transmission de l'énergie s'effectuant de manière permanente ou cyclique et l'énergie transmise étant stockée en tampon dans un accumulateur d'énergie (12),
l'énergie étant transmise de manière inductive ou capacitive,
le temps de décharge de l'accumulateur d'énergie (12) étant compris entre 2% et 25% du cycle total de séparation.

2. Procédé selon la demande 1, **caractérisé en ce que** la transmission de l'énergie est effectuée vers un condensateur en tant qu'accumulateur d'énergie.

3. Procédé selon la demande 1 ou 2, **caractérisé en ce que** la transmission de l'énergie s'effectue par l'intermédiaire d'un palier (13) dans lequel sont disposés un stator (10) et un rotor (11) pour la transmission de l'énergie.

4. Procédé selon la demande 1 ou 2, **caractérisé en ce que** la transmission d'énergie est couplée à la transmission de force.

5. Procédé selon la demande 1 ou 2, **caractérisé en ce que** la transmission d'énergie est effectuée par des pièces métalliques intégrées dans une courroie.

6. Dispositif pour couper à la longueur un tube en plastique extrudé (6) comprenant
un dispositif de séparation (5) et
une unité de séparation (8) tournant autour de l'axe d'extrusion (7) du tube extrudé (6),
l'unité de séparation (8) étant montée de manière rotative et
des outils de coupe (9) sont disposés sur l'unité de séparation (8), de l'énergie étant transmise pour déplacer les outils de coupe (9) et l'énergie transmise étant **stockée en tampon dans un accumulateur d'énergie (12),**
**caractérisé en ce que**
les paliers de l'unité de séparation (8) sont conçus de telle sorte que l'énergie peut être transmise **d'une zone extérieure fixe (I) à une zone intérieure mobile (II) ,**
la transmission d'un stator (14) à un rotor (15) s'effectuant par contact avec les corps roulants, et
dans lequel le palier est rempli d'un fluide conducteur, ce qui permet un transfert permanent d'énergie.

7. Dispositif selon la demande 6, **caractérisé en ce que** les éléments roulants sont pourvus d'une surface élastique électriquement conductrice.

8. Dispositif selon la demande 6 ou 7, **caractérisé en ce que** des chaînes d'entraînement ou des pignons tendus sont utilisés.
